Europäisches Patentamt

**European Patent Office**

**Office européen des brevets**

(19)

(11) Numéro de publication: **0 059 115**
A1

# DEMANDE DE BREVET EUROPEEN

(21) Numéro de dépôt: **82400062.4**

(51) Int. Cl.³: **G 01 N 15/02**

(22) Date de dépôt: **14.01.82**

(30) Priorité: **14.01.81 FR 8100549**

(71) Demandeur: **ETAT FRANCAIS représenté par Le Ministère de l'Urbanisme et du Logement Laboratoire Central des Ponts et Chaussees, 58 boulevard Lefebvre, F-75732 Paris Cedex 15 (FR)**

(43) Date de publication de la demande: **01.09.82**
**Bulletin 82/35**

(72) Inventeur: **Caussignac, Jean-Marie, 32 avenue du Général de Gaulle, F-94170 Le Perreux S/Marne (FR)**
Inventeur: **Leroy, Maurice François, 30 Place de l'Hôtel de Ville, F-76300 Sotteville les Rouen (FR)**

(84) Etats contractants désignés: **AT BE CH DE FR GB IT LI LU NL SE**

(74) Mandataire: **Hasenrader, Hubert et al, Cabinet BEAU DE LOMENIE 55, rue d'Amsterdam, F-75008 Paris (FR)**

(54) **Appareil et procédé d'ombroscopie.**

(57) L'appareil d'ombroscopie comporte un laser fixe (1), un cylindre fixe réfléchissant (3) d'axe orthogonal (4) à la direction du rayon laser incident (2) et susceptible de renvoyer la lumière vers et à travers un rideau de granulés (6), un dispositif (10) de réception de la lumière engendrant des signaux représentatifs de la lumière reçue, un dispositif de traitement des signaux (12) et un dispositif de visualisation.

Le dispositif de réception peut être constitué par une barrette de photodiodes (10, 11) associé à un système qui procède à une digitalisation des ombres portées des gravilons et à leur visualisation sous forme d'une image type télévision.

Le dispositif de réception peut être constitué par une batterie de lentilles (18) au foyer desquelles sont placées des cellules photo-électriques analogiques (19) de façon à engendrer des signaux représentatifs du pouvoir couvrant des granulés.

Appareil et procédé d'ombroscopie.

La présente invention concerne un appareil d'ombroscopie pour l'étude d'un matériau en granulés, cet appareil étant du type comportant un laser fixe émettant un rayon lumineux dirigé sur un dispositif optique susceptible de renvoyer la lumière vers et à travers un rideau de matériau à étudier tombant d'un distributeur, l'appareil comportant également un dispositif de réception de la lumière ayant traversé le rideau de matériau, ce dispositif engendrant des signaux représentatifs de la lumière reçue, l'appareil comportant également un dispositif de traitement de signaux et, le cas échéant, un dispositif de visualisation des signaux engendrés par le dispositif de réception et traités par le dispositif de traitement.

Des appareils et méthodes d'analyse sans contact de mélange de gravillons se sont développés récemment, et se divisent en deux groupes basés respectivement sur la diffraction optique et l'ombroscopie.

Il s'agit, dans cette dernière méthode, d'examiner les ombres portées par des objets traversant un faisceau lumineux, le plus souvent à des fins de comptage d'éléments.

Un granulomètre à laser a déjà été proposé dans un article intitulé "détermination de la composition granulaire de matériaux pulvérulents à l'aide de méthodes sans contact" de VOROBEV et al (Stroitel' nye materialy, MOSCOU, URSS, 1978, n° 7 pp 17-18).

L'appareil décrit dans l'article précité, comporte un dispositif à miroir tournant réalisant le balayage lumineux du voile de gravillon. Le dispositif de réception est constitué d'un second miroir tournant synchronisé au précédent.

L'inconvénient d'un tel dispositif est celui d'un appareil utilisant des pièces mécaniques mobiles qui engendrent le plus souvent des réglages délicats et un manque de fiabilité dans le temps, surtout lorsque les conditions extérieures sont peu favorables.

Le but de l'invention est de proposer un appareil d'ombroscopie qui ne présente pas les inconvénients précités. Il est, plus précisément de rendre le dispositif entièrement statique.

Ce but est atteint par l'invention du fait que le dispositif optique est un dispositif fixe transformant le faisceau laser reçu en une nappe lumineuse plane s'étendant vers et traversant le rideau de gravillons sur au moins sa largeur et sous un angle sensiblement droit avant d'être recueillie par le dispositif de réception, ledit dispositif de réception étant disposé dans le plan de la nappe lumineuse et sur la largeur correspondant à la largeur du rideau de granulés.

Avantageusement, le dispositif optique est constitué d'un cylindre réfléchissant d'axe orthogonal à la direction du rayon laser incident.

Selon un premier mode de réalisation de l'appareil conforme à l'invention, le dispositif de réception est constitué par une barrette de photodiodes dont chacune indique la valeur 1 ou 0, suivant qu'elle reçoit ou non de la lumière.

Avantageusement, le dispositif de traitement est susceptible d'interroger la valeur du signal délivré par les photodiodes de la barrette à chaque intervalle de temps $\Delta t$, et de procéder à une digitalisation des ombres portées des gravillons, le dispositif comprenant des mémoires vives sur lesquelles sont stockées ces informations et les moyens de visualisation permettant la visualisation des images de gravillons digitalisées sous forme d'une image type télévision.

Avantageusement, l'appareil d'ombroscopie comprend en outre des moyens de traitement statistique permettant de délivrer, à partir de ces informations stockées dans les mémoires vives,des courbes granulométriques.

Selon un second mode de réalisation de l'appareil conforme à l'invention, le dispositif de réception est constitué par une batterie de lentilles au foyer desquelles sont placées des cellules photo-électriques analogiques, de façon à engendrer des signaux représentatifs du pouvoir couvrant des granulés.

Avantageusement, l'appareil comporte, en dehors de l'ombre portée du rideau de gravillons,une cellule photo-électrique de référence.

L'invention concerne également un procédé d'ombroscopie qui se caractérise en ce que l'on transforme le faisceau de lumière parallèle en une nappe lumineuse plane s'étendant vers et traversant le rideau de gravillons sur au moins sa largeur et sous un angle sensiblement droit.

Selon une première variante du procédé, on recueille la lumière sur des photodiodes qu'on interroge à chaque intervalle de temps $\Delta t$ et on stocke ces informations sur des mémoires vives, de façon à obtenir une digitalisation des ombres portées des gravillons, cette digitalisation étant susceptible de visualisation et, avantageusement, on traite statistiquement les ombres digitalisées des gravillons de façon à obtenir des courbes granulométriques.

Selon une seconde variante du procédé, on recueille la lumière ayant traversé le rideau de gravillons sur une batterie de lentilles au foyer desquelles on place des cellules photo-électriques analogiques, de façon à engendrer des signaux représentatifs du pouvoir couvrant des granulés.

Les caractéristiques et avantages de l'invention seront mieux compris à la lecture de la description qui va suivre de deux modes de réalisation conformes à l'invention, description faite en référence aux dessins annexés sur lesquels :

- la figure 1 est une vue en perspective schématique du premier mode de réalisation d'un appareil conforme à l'invention ;

- la figure 2 est une vue en plan du dispositif optique conforme à l'invention ;

- la figure 3 est une représentation schématique du fonctionnement du dispositif de traitement de la figure 1 ;

- la figure 4 est une vue de l'image "type télévision" représentant l'ombre portée digitalisée d'un échantillon de gravillon obtenue par l'appareil de la figure 1 ;

- la figure 5 est une vue en perspective schématique du second mode de réalisation d'un appareil conforme à l'invention.

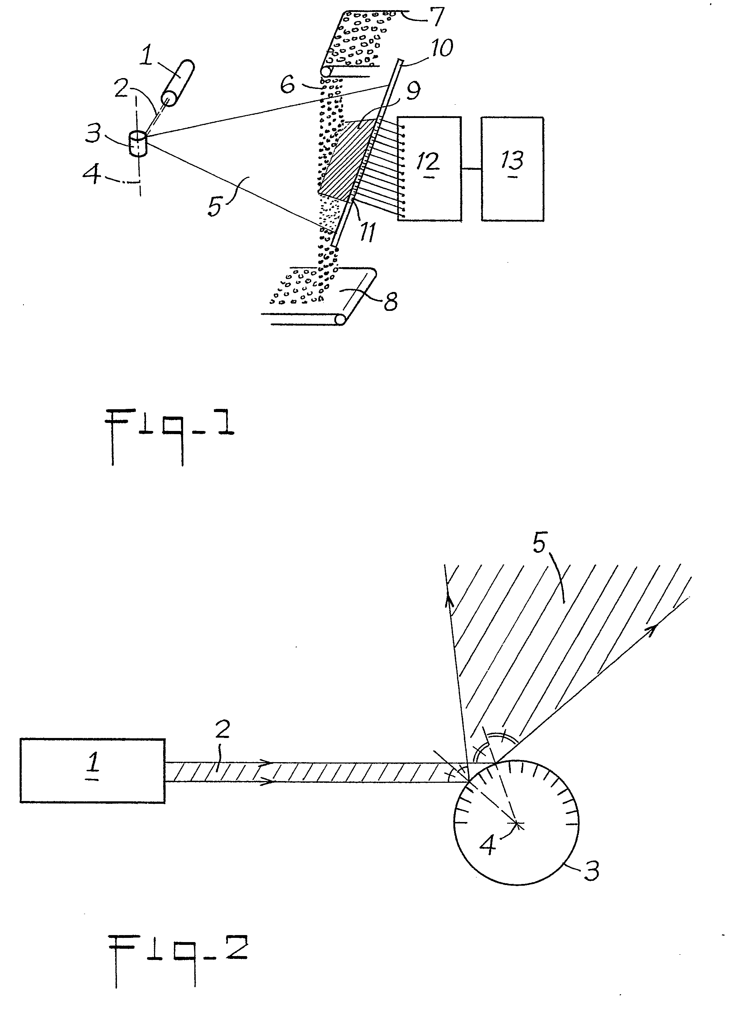

La figure 1 montre un laser 1 envoyant un faisceau de lumière parallèle 2 sur la surface cylindrique réfléchissante d'un cylindre 3 dont l'axe 4 est orthogonal au faisceau 2 (figure 2). Le faisceau de lumière parallèle 2 est alors réfléchi, selon les lois naturelles de la réflection, en un faisceau divergent en éventail formant une nappe lumineuse 5.

La nappe lumineuse 5 traverse, sous un angle pratiquement droit, un rideau 6 de gravillons tombant d'une bande transporteuse supérieure 7 et repris par une bande transporteuse inférieure 8. La nappe 5 traverse le rideau sur au moins la largeur de ce dernier, l'angle d'ouverture de la nappe étant fonction du diamètre de cylindre 3.

L'ombre portée 9 par les gravillons du rideau 6 est détectée au moyen d'une barrette horizontale 10 (dans le plan de la nappe lumineuse 5) portant une pluralité de photodiodes 11 adjacentes sur une largeur correspondant à la largeur du rideau 6 en tenant compte de la divergence de la nappe lumineuse 5.

Il est d'ailleurs aisé de modifier pour une granulométrie donnée la largeur des ombres portées sur les cellules en agissant sur les distances , soit du dispositif optique 3 au plan de chute 6 des gravillons, soit dudit plan de chute 6 à la barrette 10 de photodiodes.

Quant aux photodiodes 11 de la barrette 10, on peut les choisir dans une vaste gamme de diamètres, le choix étant motivé par des questions d'encombrement et de capacité de traitement numérique.

Les photodiodes fonctionnent en tout ou rien et donnent un signal de valeur 1 en absence de granulat et un signal de valeur 0 en présence de granulat.

Un système à microprocesseur interroge simultanément l'état de toutes les cellules de la barrette et stocke ces informations sur des mémoires vives.

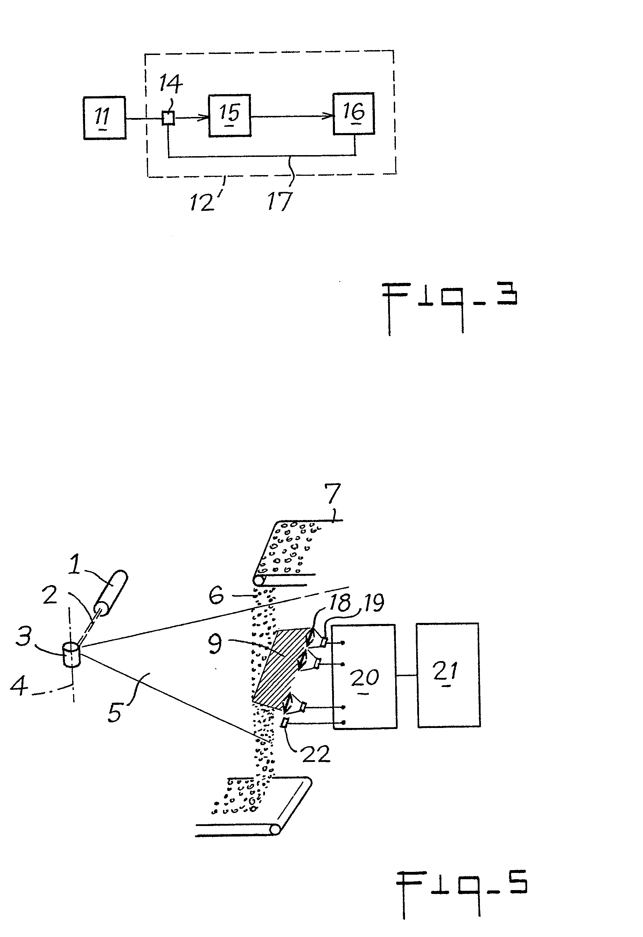

Le dispositif de traitement 12 comporte donc un dispositif électronique d'interrogation dont la figure 3 illustre le principe : une photodiode 11 délivre un signal (0 ou 1) à un poste 14 de lecture, ce signal est mis en forme par des moyens 15 et stocké dans un registre mémoire 16, la boucle d'interrogation 17 étant réalisée par un microprocesseur.

On a visualisé, sur un dispositif de visualisation 13 les informations enregistrées en mémoire.

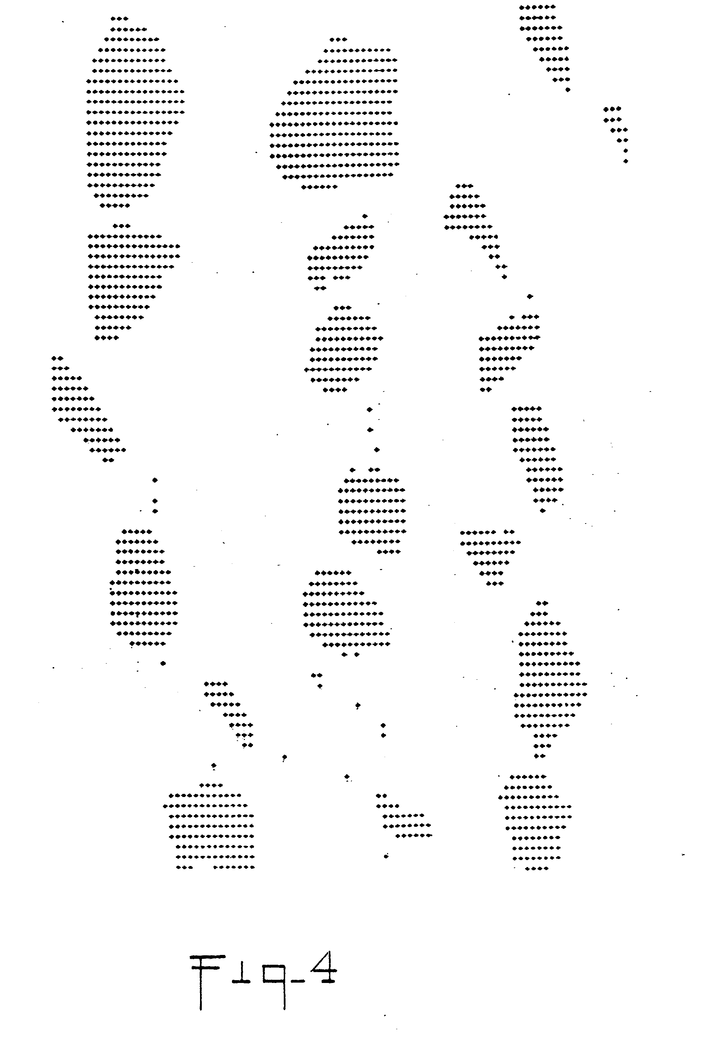

On peut visualiser très simplement sur une imprimante les images digitalisées des gravillons. A un instant $t$, l'état 0 d'une photodiode (présence de granulat) est représenté par une croix sur l'imprimante, l'état 1 (absence de granulat) laisse un blanc sur le papier, formant ainsi une image sensiblement comparable à une image télévision de chaque granulat (Voir figure 4).

Ensuite, différents sous-programmes de dépouillement peuvent classer les images obtenues suivant des critères de surfaces, de racine carrée des surfaces, de largeurs maximales, de hauteurs maximales, etc. Il va sans dire que le traitement automatique de ces données, se fait sans difficulté par des moyens de traitement statistique bien connus et dont la description n'entre pas dans le cadre de la présente invention. Mais dans les cas où un investissement peu élevé est recherché, il peut même être procédé à un dépouillement manuel de l'image type "télévision", par exemple sur histogrammes cumulés pour retrouver les courbes granulométriques classiques.

Il est à noter tout de suite que la validité de la méthode proposée dépend de la vérification plus ou moins approchée de certaines hypothèses :

1) Tous les granulats doivent traverser la nappe lumineuse 5 à la même vitesse. Cette hypothèse est relativement bien vérifiée, compte tenu de la faible résistance de l'air pour les granulométries 2/20 qui sont les plus faibles auxquelles est destinée la présente méthode .

2) L'écoulement doit avoir la configuration d'une monocouche. Il semble que pour les faibles granulométries, il y ait risque de formation de paquets. Il est donc nécessaire, d'une part, de tester des granulats parfaitement séchés, et, d'autre part, de dissocier les paquets par incorporation d'un système vibrant (non représenté) aux moyens de déversement du rideau 6 (bande supérieure de transport 7).

7  0059115

3) La répartition des différentes classes granulométriques doit être purement aléatoire, pour que le temps d'obturation moyen pendant un intervalle de temps suffisamment long soit identique pour toutes les cellules 11.

Les limitations de la méthode proviennent du pas d'échantillonnage qui dépend de la dimension et de l'espacement des cellules de détection. La dimension d'une cellule définit la limite inférieure de résolution de l'ombre portée des gravillons, qui, ainsi qu'il a été déjà noté, n'est pas forcément la dimension des gravillons.

En fonction des classes de granulométrie étudiées, il peut être choisi des cellules de diamètres différents.

Dans des expériences conduites par le demandeur, on a utilisé, pour des granulats de petites dimensions (< 20mm) une barrette de 32 photodiodes de diamètre 1,8 mm, et pour les coupures plus élevées (jusqu'à 50mm), 32 cellules de diamètre 3,6 mm, en faisant varier dans chacun des cas le rapport entre la distance du dispositif optique au rideau et la distance du rideau aux cellules. Le débit choisi était d'environ 10 kg/minute.

En premier lieu, il a été procédé à l'étalonnage du système par des billes calibrées que l'on faisait tomber à l'emplacement du plan 6 de chute des gravillons. La vitesse de balayage est réglée de telle façon que pour une catégorie de billes donnée, le nombre de lignes représentant sur la sortie de l'imprimante la hauteur verticale de l'ombre d'une bille soit identique au nombre de points représentant la largeur de l'ombre de la bille.

Toute une série d'essais ont été réalisés, après l'étalonnage précité, suivis du tracé de courbes granulométriques. Les courbes granulométriques obtenues par cette méthode présentent un aspect semblable à celles obtenues de façon classique par tamisage.

On a de plus remarqué que l'ajustement de la courbe granulométrique était pratiquement définitif après un seul passage d'un échantillon de granulats et que la réitération des passages n'améliorait pas sensiblement la précision.

L'appareil d'ombroscopie représenté à la figure 1,et qui vient d'être décrit, peut donc être qualifié de granulomètre sans contact.

Une variante de cet appareil, représentée en figure 5, va maintenant être décrite, et permet de réaliser un appareil donnant des informations sur le pouvoir couvrant des granulés.

L'appareil comprend, comme le précédent, un laser 1, un dispositif optique 3 transformant le faisceau laser incident 2 en une nappe 5 qui traverse un rideau 6 de gravillons.

A la place de la barrette de photodiodes du granulomètre, l'appareil comprend un dispositif de réception constitué par une batterie de lentilles convergentes 18 au foyer desquelles sont placées des cellules photo-électriques analogiques 19, reliées à un dispositif de traitement de signal 20, suivi éventuellement d'un dispositif de visualisation 21.

La largeur de la lentille détermine le pas d'échantillonnage transversal du voile. Le pas retenu dans les expériences effectuées par le Demandeur est de 50 mm.

Chaque cellule délivre un courant électrique proportionnel à l'intensité de l'éclairement qu'elle reçoit, donc à la quantité de lumière que laisse passer l'échantillon de voile correspondant. On peut, en comparant les signaux de chaque cellule, détecter les hétérogénéités éventuelles.

Les signaux analogiques sont digitalisés à l'aide d'un convertisseur tension-fréquence, et sont liés au pouvoir couvrant et au débit de gravillons. En choisissant une constante de temps correspondant à l'échantillonnage longitudinal désiré, le dispositif de traitement délivre une valeur représentative du pouvoir couvrant sur l'échantillon concerné.

Pour pallier les éventuelles fluctuations du faisceau lumineux, on réserve, en dehors de l'ombre portée du voile de gravillons, une voie à l'éclairement de références à laquelle on associe une cellule de référence 22. On peut ainsi, pour chaque échantillon, déterminer un contraste $\alpha$ :

$$\alpha = \frac{I_o(t) - I(t)}{I_o(t)} \quad \text{avec } I_o(t) = I_o(0) \times \frac{I_r(t)}{I_r(0)}$$

où  $I(t)$ = quantité de lumière reçue par la cellule de mesure pendant la constante de temps $\Delta t$

$I_o(0)$ = quantité de lumière reçue par la cellule de mesure à l'instant $t = 0$ (pas de gravillons)

$I_r(t)$ = quantité de lumière reçue par la cellule de référence pendant la constante de temps $\Delta t$

$I_r(0)$ = quantité de lumière reçue par la cellule de référence à l'instant $t = 0$ (pas de gravillons).

Des essais, effectués avec des granulométries 4/6, 6/10, 10/14, 14/20 pour des débits variant de 1,5 à 13 tonnes/heure pour une veine de 100 mm de large ont conduit à des pourcentages d'obscurcissement variant de quelques pour cent à 75 % de l'intensité lumineuse nominale. Dans chaque coupure granulométrique, il a été constaté une relation linéaire entre le contraste et le débit (ou le pouvoir couvrant), la pente de la courbe variant en fonction de la coupure granulométrique considérée.

Naturellement, l'invention n'est pas limitée aux deux modes de réalisation décrits mais sa portée est définie par les revendications en annexe.

REVENDICATIONS

1.      Appareil d'ombroscopie pour l'étude d'un matériau en granulés, cet appareil étant du type comportant un laser fixe émettant un rayon lumineux dirigé sur un dispositif optique susceptible de renvoyer la lumière vers et à travers un rideau de matériau à étudier tombant d'un distributeur, l'appareil comportant également un dispositif de réception de la lumière ayant traversé le rideau de matériau, ce dispositif engendrant des signaux représentatifs de la lumière reçue, l'appareil comportant également un dispositif de traitement des signaux et, le cas échéant, un dispositif de visualisation des signaux engendrés par le dispositif de réception et traités par le dispositif de traitement, caractérisé en ce que le dispositif optique (3) est un dispositif fixe transformant le faisceau laser reçu (2) en une nappe lumineuse plane (5) s'étendant vers et traversant le rideau (6) de gravillons sur au moins sa largeur et sous un angle sensiblement droit avant d'être recueillie par le dispositif de réception (11,18), ledit dispositif de réception étant disposé dans le plan de la nappe lumineuse (5) et sur la largeur correspondant à la largeur du rideau (5) de granulés.

2.      Appareil d'ombroscopie selon la revendication 2, caractérisé en ce que le dispositif optique est constitué d'un cylindre réfléchissant (3) d'axe orthogonal (4) à la direction du rayon laser incident (2).

3.      Appareil d'ombroscopie selon l'une quelconque des revendications 1 ou 2, caractérisé en ce que le dispositif de réception est constitué par une barrette de photodiodes (10,11) dont chacune (11) indique la valeur 1 ou 0 suivant qu'elle reçoit ou non de la lumière.

4. Appareil d'ombroscopie selon la revendication 3, caractérisé en ce que le dispositif de traitement (12) est susceptible d'interroger la valeur du signal délivré par les photodiodes (11) de la barrette à chaque intervalle de temps Δt , et de procéder à une digitalisation des ombres portées des gravillons, le dispositif comprenant des mémoires vives sur lesquelles sont stockées ces informations, et les moyens de visualisation (13) permettant la visualisation des images de gravillons digitalisées sous forme d'une image type télévision.

5. Appareil d'ombroscopie selon la revendication 4, caractérisé en ce qu'il com end en outre des moyens de traitement statistiques permettant de délivrer à partir de ces informations stockées dans les mémoires vives des courbes granulométriques.

6. Appareil d'ombroscopie selon l'une quelconque des revendications 1 ou 2, caractérisé en ce que le dispositif de réception est constitué par une batterie de lentilles (18) au foyer desquelles sont placées des cellules photo-électriques analogiques (19) de façon à engendrer des signaux représentatifs du pouvoir couvrant des granulés.

7. Appareil d'ombroscopie selon la revendication 6, caractérisé en ce qu'il comporte, en dehors de l'ombre portée (9) du rideau (6) de gravillons, une cellule photo-électrique de référence (22).

8. Procédé d'ombroscopie pour l'étude d'un matériau en granulé, ce procédé comportant les étapes de réfléchir un faisceau de lumière parallèle émis par un laser vers et à travers un rideau de matériau à étudier, de recueillir la lumière ayant traversé ledit rideau et d'engendrer des signaux représentatifs de cette lumière, de traiter lesdits signaux et, le cas échéant, de visualiser les résultats obtenus, de de façon à obtenir des informations sur le matériau en granulé, caractérisé en ce que l'on transforme le faisceau de lumière parallèle (2) en une nappe lumineuse (5) plane s'étendant vers et traversant le rideau (6) de gravillons sur au moins sa largeur et sous un angle sensiblement droit.

9. Procédé d'ombroscopie selon la revendication 8, caractérisé en ce qu'on recueille la lumière ayant traversé le rideau (6) de gravillons sur une barrette de photodiodes (10, 11) dont chacune (11) indique la valeur 1 ou 0 suivant qu'elle reçoit ou non de la lumière.

10. Procédé d'ombroscopie selon la revendication 9, caractérisé en ce qu'on interroge la valeur du signal délivré par les photodiodes (11) à chaque intervalle de temps $\Delta t$ et on stocke ces informations sur des mémoires vives, de façon à obtenir une digitalisation des ombres portées des gravillons, cette digitalisation étant susceptible de visualisation.

11. Procédé d'ombroscopie selon la revendication 10, caractérisé en ce qu'on traite statistiquement les ombres digitalisées des gravillons de façon à obtenir des courbes granulométriques.

12. Procédé d'ombroscopie selon la revendication 8, caractérisé en ce qu'on recueille la lumière ayant traversé le rideau (6) de gravillons sur une batterie de lentilles (18) au foyer desquelles on place des cellules photo-électriques analogiques (19), de façon à engendrer des signaux représentatifs du pouvoir couvrant des granulés.

Fig-1

Fig-2

0059115

Fig-3

Fig-5

Fig-4

**Office européen des brevets**

## RAPPORT DE RECHERCHE EUROPEENNE

Numéro de la demande

EP 82 40 0062

| Catégorie | Citation du document avec indication, en cas de besoin, des parties pertinentes | Revendication concernée |
|---|---|---|
| | **DOCUMENTS CONSIDERES COMME PERTINENTS** | |
| A | FR - A - 2 413 654 (SUMITOMO KINZOKU K.K.K.)<br><br>* pages 5-7; figure 1 * | 1,3-5, 11 |
| A | US - A - 4 075 462 (W. ROWE)<br><br>* colonnes 3-5; figure 1 * | 1,3-5, 8-10 |
| A | FR - A - 2 113 635 (COLONIAL SUGAR REFINING)<br><br>* pages 11,13,14,16; figure 1 * | 1,3 |
| A | US - A - 3 984 154 (S. CHIN et al)<br><br>* colonnes 1,2; figures 1,5 * | 2 |
| A | INSTRUMENTS AND CONTROL SYSTEMS, volume 49, no. 11, novembre 1976 CHILTON CY RADNOR PA (US) R. PFOUTZ "Digital optics for accurate gaging" pages 67-69<br><br>* pages 67-68 * | 3 |
| A | INSTRUMENTS AND CONTROL SYSTEMS, volume 49, no. 3, mars 1976 RADNOR PA (US) S. LEHRER "A fast, noncontact approach to accurate gauging" pages 51-57<br><br>* pages 51,54 * | 3 |

**CLASSEMENT DE LA DEMANDE (Int. Cl. 3)**

G 01 N 15/02

**DOMAINES TECHNIQUES RECHERCHES (Int. Cl. 3)**

G 01 N 15/02
B 07 C 5/10
G 06 M 1/10
G 01 B 11/02
G 01 V 9/04

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-05-1982 | BOEHM |

OEB Form 1503.1  06.78